(19) Europäisches Patentamt
European Patent Office
Office européen des brevets

(11) EP 0 764 677 B1

(12) # FASCICULE DE BREVET EUROPEEN

(45) Date de publication et mention de la délivrance du brevet:
**10.01.2007 Bulletin 2007/02**

(21) Numéro de dépôt: **96401881.6**

(22) Date de dépôt: **02.09.1996**

(51) Int Cl.:
***C08J 3/03*** *(2006.01)* ***D06M 15/643*** *(2006.01)*

(54) **Emulsion aqueuse de polyorganosiloxane pour l'enduction de matière textile**

Wässrige Polyorganosiloxanemulsion für die Behandlung von Textilprodukten

Aqueous polyorganosiloxane emulsion for treating textile fabric

(84) Etats contractants désignés:
**AT BE CH DE DK ES FI FR GB GR IE IT LI LU NL PT SE**

(30) Priorité: **14.09.1995 FR 9511002**

(43) Date de publication de la demande:
**26.03.1997 Bulletin 1997/13**

(73) Titulaire: **RHODIA CHIMIE**
**92408 Courbevoie Cédex (FR)**

(72) Inventeurs:
- **Bertry, Jean-Louis**
**69008 Lyon (FR)**
- **Ladreyt, Marc**
**69003 Lyon (FR)**
- **Pouchelon, Alain**
**69330 Meyzieu (FR)**
- **Street, Chris**
**69350 La Mulatiere (FR)**

(74) Mandataire: **Colombet, Alain André et al**
**Cabinet Lavoix,**
**2, Place d'Estienne d'Orves**
**75441 Paris Cedex 09 (FR)**

(56) Documents cités:
**EP-A- 0 169 098**
**EP-A- 0 253 747**
**EP-A- 0 350 413**
**EP-A- 0 484 001**
**EP-A- 0 552 983**
**EP-A- 0 572 006**
**EP-A- 0 663 468**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention a trait à une émulsion aqueuse de polyorganosiloxane, notamment pour l'enduction de substrats en matière textile ou analogue comme par exemple des supports tissés ou non tissés, destinée à produire un élastomère en couche mince, ainsi qu'à un procédé d'enduction correspondant et aux produits ainsi enduits.

Dans de nombreuses applications, on cherche à protéger la matière textile de la chaleur, du feu ou d'autres agressions par une couche d'élastomère silicone et/ou à lui conférer des propriétés spécifiques dans certaines applications (propriétés diélectriques par exemple). Comme applications, on peut citer notamment les sacs gonflables utilisés pour la protection des occupants d'un véhicule, en anglais "air bag", tresses de verre (gaines en tissu de verre de protection thermique et diélectrique pour fil électrique), bandes transporteuses, tissus coupe-feu ou isolants thermiques, compensateurs (manchons flexibles d'étanchéité pour tuyauterie), tentes, vêtements...

Notamment en ce qui concerne les sacs gonflables de type "air bag", les propriétés essentielles recherchées sont la résistance au feu et à la température, l'imperméabilité aux gaz, la tenue au vieillissement et la bonne adhérence sur la matière textile. Voir notamment le brevet français FR-A-2 668 106.

On effectue donc des revêtements de silicone par enduction du substrat, puis durcissement (réticulation) de la composition pour former l'élastomère.

Dans certaines applications, pour des raisons de compétitivité économique, on cherche à appliquer des couches très fines de silicone, ce qui devient difficile avec un élastomère 100 % silicone ; par exemple sur un tissu en polyamide 6,6 de 235 ou 470 dtex, la quantité minimale que l'on peut déposer par les techniques classiques de type racle est de l'ordre de 40 g/$m^2$ soit une épaisseur moyenne de l'ordre de 40 microns. Pour obtenir des quantités inférieures, on est obligé de recourir à un élastomère de silicone mis en oeuvre en phase solvant voir par exemple EP-A-0 663 468, ce qui n'est pas satisfaisant d'un point de vue industriel notamment pour des problèmes liés à l'environnement. On a aussi proposé pour les applications textiles, des émulsions aqueuses d'huiles silicones non réticulantes et sans charge, ne conférant aucune tenue thermique.

Les récents développements des émulsions aqueuses de silicone avec charge ne permettent pas non plus d'obtenir des épaisseurs d'enduction très faibles.

Ainsi, la demande de brevet européen EP-A-0 535 649 propose une composition pour le revêtement de sacs gonflables "airbag" comprenant un organopolysiloxane (A) en émulsion dans l'eau en présence d'un émulsifiant anionique, un promoteur d'adhérence (B) qui est choisi parmi le produit de réaction entre un silane amino-fonctionnel ou un hydrolysat de celui-ci, avec un anhydride acide; un silane époxy-fonctionnel ou un hydrolysat de celui-ci et/ou un organosilane ayant un radical isocyanate et un radical hydrolysable ou un hydrolysat de celui-ci, une silice colloïdale (C) et un catalyseur (D). L'objectif de cette composition est de permettre des revêtements d'épaisseur allant de 40 à 100 $\mu$m. Des revêtements de 100 $\mu$m environ sont mentionnés.

De même, la demande de brevet européen EP-A-0 552 983 décrit une composition du même type, obtenue à partir d'un organopolysiloxane (A) ayant au moins deux groupes alcényle, d'un organohydrogénopolysiloxane (B) ayant au moins trois atomes d'hydrogène et un catalyseur de réticulation (C), par émulsification dans l'eau en présence d'un émulsifiant. Une charge renforçante telle qu'une silice colloïdale peut être ajoutée. L'objectif est là aussi de permettre des revêtements d'épaisseur de 40 à 100 $\mu$m. Un revêtement de 100 $\mu$m environ est mentionné.

Dans des domaines d'application différents, les industriels ont proposé diverses émulsions silicone dans lesquelles interviennent des tensioactifs associés à des solutions d'alcool polyvinylique (EP-A-0 572 006, EP-A-0 350 413, EP-A-0 169 098 et EP-A-0 253 747). Ces émulsions ne sont cependant pas préparées selon le mode de mise en oeuvre spécifique des émulsions selon l'invention.

La présente invention a pour objectif de fournir une nouvelle composition et une nouvelle technique permettant d'obtenir des revêtements dont le poids de dépôt est inférieur à 40 g/$m^2$, c'est-à-dire d'épaisseur inférieure à 40 $\mu$m environ, notamment de poids déposé compris entre 5 et 40 g/$m^2$ (entre 5 et 40 $\mu$m environ d'épaisseur), qui soient exploitables dans le domaine de l'enduction textile, en particulier sacs gonflables "airbag", tresses de verre, bandes transporteuses, tissus coupe-feu ou isolants thermiques, compensateurs, tentes; vêtements.

Un autre objectif de l'invention est de pouvoir être appliquée aux compositions élastomères silicones en général, en particulier celles vulcanisables à froid ou éventuellement à température supérieure, qu'elles soient mono ou multicomposants ou encore de polyaddition ou de polycondensation.

Un autre objectif de l'invention est de proposer de telles compositions et techniques qui soient aisées et peu coûteuses à mettre en oeuvre, et permettant en outre, dans le cas d'un revêtement plus mince qu'à l'ordinaire, un gain de matière non négligeable.

Un autre objectif de l'invention est donc de permettre de réduire la quantité de matière silicone pour une application donnée, sans préjudice sur les caractéristiques du produit final.

La présente invention a donc pour objet une émulsion aqueuse de polyorganosiloxane selon la revendication 1. Par hydrocolloïde protecteur, on entend un polymère possédant à la fois des groupements hydrophiles et des groupements compatibles avec la phase silicone.

L'hydrocolloïde protecteur est de préférence un alcool polyvinylique (APV) ou un mélange d'APV et, préférentiellement l'APV en solution aqueuse a une viscosité dynamique type ($\eta_{dt}$) comprise entre 5 et 40 mPa.s, de préférence entre 10 et 30 mPa.s, et un indice d'ester supérieur ou égal à 80, de préférence à 100 et notamment compris entre 120 et 200.

Les alcools polyvinyliques (APV) sont des composés obtenus indirectement à partir de leur esters, par hydrolyse en milieu aqueux ou par alcoolyse en milieu anhydre. En pratique, les esters utilisés comme matière première sont couramment les acétates de polyvinyles. Généralement, la lyse des esters conduisant aux APV n'est pas complète. Il reste dans la molécule des radicaux acyles dont la proportion influe sur les propriétés de l'APV, notamment sur sa solubilité. Un mode de définition des APV repose donc sur l'indication de l'indice d'ester (I.E) qui est inversement proportionnel au taux d'hydrolyse. La mesure de l'I.E. s'effectue de manière connue en soi, par neutralisation de l'acidité éventuelle de l'alcool polyvinylique, saponification des groupes acyles et titrage de l'excès d'alcalinité.

Les alcools polyvinyliques selon l'invention sont également caractérisés par leur degré de condensation que l'on peut évaluer par la détermination de la viscosité dynamique d'une solution type (désignée par $\eta_{dt}$ dans le présent exposé), sachant que cette variable est d'autant plus élevée que le degré de condensation est plus grand.

La viscosité $\eta_{dt}$ correspond au coefficient de viscosité dynamique d'une solution aqueuse d'APV à 4% poids, mesuré à une température de 20 $\pm$ 5°C à l'aide d'un viscosimètre d'Ostwald.

Comme autre hydrocolloïde protecteur, on peut également citer des polyesters sulfonés hydrosdispersables, notamment de type polyéthylène téréphtalate sulfoné.

Les polyesters sulfonés hydrodispersables sont des produits connus et disponibles dans le commerce. Ils peuvent être préparés par co-condensation d'un diacide organique (tel qu'un diacide aliphatique saturé ou insaturé, un diacide aromatique, un diacide présentant plusieurs noyaux aromatiques, un diacide arylaliphatique), l'un de des diesters ou son anhydride et d'un diacide organique sulfoné ou l'un de ses diesters avec un diol, en présence d'un catalyseur habituel de polyestérification tel que l'orthotitanate de tétraisopropyle.

Comme monomères de départ couramment utilisés pour la préparation des polyesters sulfonés, hydrodispersables, on peut citer en tant que:

- diacides organiques : les diacides aliphatiques saturés ou insaturés, les diacides aromatiques, tels que les acides succinique, adipique, subérique, sébacique, les acides maléique, fumarique, itaconique, les acides orthophtalique, isophtalique, téréphtalique, les anhydrides de ces acides et leurs diesters comme les diesters méthyliques, éthyliques, propyliques, butyliques. Les composés préférés sont l'acide adipique, les acides orthophtalique, isophtalique, téréphtalique ;
- diacides organiques sulfonés : les diacides sulfonates de sodium ou leurs diesters tels que les dialcoylisophtalates et dialcoylsulfosuccinates comme le diméthylisophtalate-5 sulfonate de sodium ou le diméthylsulfosuccinate de sodium ;
- diols : les glycols aliphatiques tels que l'éthylèneglycol, le diéthylèneglycol, le dipropylèneglycol et les homologues supérieurs, le butane-1,4 diol, l'hexane-1,6 diol, le néopentylglycol et les glycols cyclaniques tels que le cyclohexanediol, le dicyclohexane-diolpropane. Les diols choisis préférentiellement sont l'éthylèneglycol et le diéthylèneglycol.

Les polyesters sulfonés hydrodispersables préférés sont ceux qui ont une masse moléculaire moyenne en nombre comprise entre 10.000 et 35.000, un indice d'acide inférieur à 5 mg de KOH/g, un taux de soufre compris entre 0, 8 et 2 % poids, de préférence entre 1, 2 et 1, 8 %. Comme polyesters de ce type, on peut utiliser notamment les produits commercialisés par Rhône Poulenc sous la marque GEROL PS20.

De préférence, on choisit un rapport phase silicone/phase hydrocolloïde de façon à avoir un ratio extrait sec compris entre 10 et 60, de préférence entre 40 et 60.

La solution aqueuse d'hydrocolloïde protecteur peut en outre comprendre au moins une tensioactif qui peut être anionique, cationique ou non ionique, en particulier un alcool gras polyéthoxylé. Il est entendu que dans le cas de l'emploi d'un polyester, l'homme du métier excluera les tensioactifs cationiques. De préférence, les tensioactifs seront non ioniques. Le ratio tensioactif/hydrocolloïde est notamment compris en 0 et 10 %. Le rôle du tensioactif sera notamment d'affiner la granulométrie de l'émulsion et éventuellement d'améliorer sa stabilité.

L'invention permet de préparer une émulsion aqueuse en présence d'une charge minérale et très avantageusement en l'absence de surfactant, ce qui permet d'obtenir une préparation apte à être appliquée en couche très mince, notamment d'épaisseur inférieure à 40 $\mu$m, par exemple entre 5 et 40 $\mu$m, tout en assurant à l'élastomère formé de bonnes propriétés compatibles notamment avec les utilisations précitées. La macromolécule (hydrocolloïde) a en outre pour avantage d'accroître la fixation de l'élastomère sur le tissu, à la façon d'une colle et de conférer un pouvoir imperméabilisant au gaz supplémentaire, particulièrement intéressant dans les applications "air bag".

La formule de polyorganosiloxanes selon l'invention comprend le ou les polyorganosiloxanes qui vont générer l'élastomère. Il s'agit de préférence d'une formule durcissable à température ambiante (23°C) et dont on pourra accélérer la réticulation par une température supérieure. Il s'agit donc de préférence d'élastomères dit vulcanisables à froid, de

polyaddition ou de polycondensation. Les élastomères vulcanisables à chaud entrent aussi dans le cadre de l'invention.

Comme on le sait, les élastomères de silicone peuvent être préparés à partir d'un système précurseur bi-composant, formé de deux parties distinctes destinées à être mélangées. Une fois en présence, les composés réactifs des deux parties peuvent réagir et la réticulation survenir. Pour de tels systèmes, l'émulsion selon la présente invention provient de la réunion de deux émulsions distinctes, chacune préparée par mise en émulsion directe de la partie de formule correspondante.

La présente invention a donc aussi pour objet un kit comprenant les deux émulsions correspondant chacune à une partie de la formule de polyorganosiloxane, ces deux émulsions étant préparées par mise en émulsion directe de la partie de formule dans sa part de solution aqueuse d'hydrocolloïde protecteur.

Toutefois, des compositions mono-composant entrent aussi dans le cadre de l'invention et notamment des compositions de polyaddition ou de polycondensation conçues pour ne réticuler que sous l'effet d'une action extérieure comme cela est connu en soi. Par exemple, ces compositions mono-composant peuvent comprendre un inhibiteur de réticulation classique ou des catalyseurs encapsulés de manière connue en soi. Donc, dans tous les cas où il est possible de réunir tous les composants au sein d'une formule unique, une émulsion unique sera utilisée.

Les compositions organopolysiloxanes durcissables utilisables dans le cadre du procédé selon la présente invention renferment un constituant principal formé de préférence d'un ou plusieurs polydiorganosiloxanes, de préférence polydiméthylsiloxane (PDMS) d'un catalyseur approprié, d'au moins une charge, d'un réticulant selon les cas et éventuellement d'un promoteur d'adhérence.

Les organopolysiloxanes, constituants principaux des compositions selon l'invention, peuvent être linéaires, ramifiés ou réticulés, et comporter des radicaux hydrocarbonés et/ou des groupements réactifs comme par exemple des groupes hydroxyles, des groupements hydrolysables, des groupements alkényles, des atomes d'hydrogène, etc. A noter que les compositions organopolysiloxanes sont amplement décrites dans la littérature et notamment dans l'ouvrage de Walter NOLL : "Chemistry and Technology of Silicones", Academic Press, 1968, 2ème édition, pages 386 à 409.

Plus précisément les organopolysiloxanes, constituants principaux des compositions selon l'invention, sont constitués de motifs siloxyles de formule générale :

$$R_nSiO_{\frac{4-n}{2}} \qquad (II)$$

et/ou de motifs siloxyles de formule :

$$Z_xR_ySiO_{\frac{4-x-y}{2}} \qquad (III)$$

Dans les formules les divers symboles ont la signification suivante :

- les symboles R, identiques ou différents, représentent chacun un groupement de nature hydrocarbonée non hydrolysable, ce radical pouvant être :

    * un radical alkyle, halogènoalkyle ayant de 1 à 5 atomes de carbone et comportant de 1 à 6 atomes de chlore et/ou de fluor,
    * des radicaux cycloalkyles et halogènocycloalkyles ayant de 3 à 8 atomes de carbone et contenant de 1 à 4 atomes de chlore et/ou de fluor,
    * des radicaux aryles, alkylaryles et halogènoaryles ayant de 6 à 8 atomes de carbone et contenant de 1 à 4 atomes de chlore et/ou de fluor,
    * des radicaux cyanoalkyles ayant de 3 à 4 atomes de carbone ;

- les symboles Z, identiques ou différents, représentent chacun un atome d'hydrogène, un groupement alcényle, un groupement hydroxyle, un atome hydrolysable, un groupement hydrolysable ;
- n = un nombre entier égal à 0, 1, 2 ou 3 ;
- x = un nombre entier égal à 0, 1, 2 ou 3 ;
- y = un nombre entier égal à 0, 1 ou 2 ;
- la somme x + y est comprise entre 1 et 3.

A titre illustratif, on peut citer les radicaux organiques R, directement liés aux atomes de silicium : les groupes méthyle ; éthyle ; propyle ; isopropyle; butyle ; isobutyle ; n-pentyle ; t-butyle ; chlorométhyle ; dichlorométhyle ; α-chloroéthyle ; α,β-dichloroéthyle ; fluorométhyle ; difluorométhyle ; α,β-difluoroéthyle ; trifluoro-3,3,3 propyle ; trifluoro cyclopropyle ; trifluoro-4,4,4 butyle ; hexafluoro-3,3,4,4,5,5 pentyle ; β-cyanoéthyle ; γ-cyanopropyle ; phényle ; p-chlorophényle ; m-chlorophényle ; dichloro-3,5 phényle ; trichlorophényle ; tétrachlorophényle ; o-, p-, ou m-tolyle ; α,α,α-trifluorotolyle ; xylyles comme diméthyl-2,3 phényle, diméthyl-3,4 phényle.

Préférentiellement, les radicaux organiques R liés aux atomes de silicium sont des radicaux méthyle, phényle, ces radicaux pouvant être éventuellement halogénés ou bien encore des radicaux cyanoalkyle.

Les symboles Z peuvent être des atomes d'hydrogène, des atomes hydrolysables tels que des atomes d'halogène, en particulier des atomes de chlore, des groupements vinyles, hydroxyles ou des groupements hydrolysables tels que : amino, amido, aminoxy, oxime, alcoxy, alkényloxy, acyloxy, etc.

La nature de l'organopolysiloxane et donc les rapports entre les motifs siloxyles (II) et (III) et la répartition de ceux-ci est comme on le sait choisie en fonction du traitement de réticulation qui sera effectué sur la composition durcissable (ou vulcanisable) en vue de sa transformation en élastomère.

Il est possible d'utiliser une grande variété de compositions monocomposantes ou bicomposantes réticulant par des réactions de polyaddition ou de polycondensation en présence d'un catalyseur métallique et éventuellement d'un réticulant et/ou d'une amine.

Les compositions organopolysiloxanes bicomposantes ou monocomposantes réticulant à température ambiante ou à la chaleur par des réactions de polyaddition, essentiellement par réaction de groupements hydrogéno-silylés sur des groupements alkényl-silylés, en présence généralement d'un catalyseur métallique, de préférence au platine, sont décrites par exemple dans les brevets US-A-3 220 972, 3 284 406, 3 436 366, 3 697 473 et 4 340 709. Les organopolysiloxanes entrant dans ces compositions sont en général constitués par des couples à base d'une part d'au moins un polysiloxane linéaire, ramifié ou réticulé constitué de motifs (III) dans lesquels le reste Z représente un groupement alkényle et où x est au moins égal à 1, éventuellement associés à des motifs (II), et d'autre part d'au moins un hydrogéno-polysiloxane linéaire, ramifié ou réticulé constitué de motifs (III) dans lesquels le reste Z représente alors un atome d'hydrogène et où x est au moins égal à 1, éventuellement associés à des motifs (II). En ce qui concerne le constituant polysiloxane insaturé à motifs (III), il peut s'agir d'une huile de viscosité dynamique à 25°C comprise entre 200 et 500 000 mPa.s. On peut utiliser au besoin à titre de ce constituant un mélange à base de l'huile précitée avec une gomme insaturée de viscosité supérieure à 500 000, pouvant aller jusqu'à $10^6$ mPa.s.

Les compositions organopolysiloxanes bicomposantes ou monocomposantes réticulant à température ambiante par des réactions de polycondensation sous l'action de l'humidité, en présence généralement d'un catalyseur métallique, par exemple un composé de l'étain, sont décrites par exemple pour les compositions monocomposantes dans les brevets US-A-3 065 194, 3 542 901, 3 779 986, 4 417 042, et dans le brevet FR-A-2 638 752, et pour les compositions bicomposantes dans les brevets US-A-3 678 002, 3 888 815, 3 933 729 et 4 064 096. Les organopolysiloxanes entrant dans ces compositions sont en général des polysiloxanes linéaires, ramifiés ou réticulés constitués de motifs (III) dans lesquels le reste Z est un groupement hydroxyle ou un atome ou groupement hydrolysable et où x est au moins égal à 1, avec la possibilité d'avoir au moins un reste Z qui est égal à un groupement hydroxyle ou à un atome ou à un groupement hydrolysable, lesdits motifs (III) étant éventuellement associés à des motifs (II). En ce qui concerne le constituant polysiloxane insaturé à motifs (III), il peut s'agir d'une huile de viscosité dynamique à 25°C comprise entre 200 et 500 000 mPa.s. De pareilles compositions peuvent contenir en outre un agent de réticulation qui est notamment un silane portant au moins trois groupements hydrolysables comme par exemple un silicate, un alkytrialkoxysilane ou un aminoalkyltrialkoxysilane.

De manière tout à fait préférée, les compositions de polycondensation comportent en outre au moins une résine silicone. Ces résines silicones sont des polymères organopolysiloxanes ramifiés bien connus et disponibles dans le commerce. Elles présentent, par molécule, au moins deux motifs différents choisis parmi ceux de formule $R_3SiO_{0,5}$ (motif M), $R_2SiO$ (motif D), $RSiO_{1,5}$ (motif T) et $SiO_2$ (motif Q).

Les radicaux R sont identiques ou différents et sont choisis parmi les radicaux alkyles linéaires ou ramifiés, les radicaux vinyle, phényle, trifluoro-3,3,3 propyle. De préférence les radicaux alkyles présentent de 1 à 6 atomes de carbone inclus. Plus particulièrement, on peut citer comme radicaux R alkyle, les radicaux méthyle, éthyle, isopropyle, tertiobutyle et n-hexyle.

Ces résines sont de préférence hydroxylées et ont dans ce cas une teneur pondérale en groupe hydroxyle comprise entre 5 et 500 meq/100g.

Comme exemples de résines, on peut citer les résines MQ, les résines MDQ, les résines TD et les résines MDT.

De même, les compositions de polyaddition peuvent aussi comporter des résines du type précité, non hydroxylées, dans lesquelles une partie des radicaux R sont des restes vinyles (teneur pondérale en Vi notamment comprise entre 10 et 40 meqVi/100g). Ces fonctions vinylées sont portées par les motifs M, D ou T. Comme exemple on peut citer les résines MDQ vinylées.

Les charges minérales sont choisies de préférence parmi les silices de combustion et les silices de précipitation.

Elles ont une surface spécifique, mesurée selon les méthodes BET, d'au moins 50 $m^2/g$, notamment comprise entre 50 et 400 $m^2/g$, de préférence supérieure à 70 $m^2/g$, une dimension moyenne des particules primaires inférieure à 0,1 micromètre ($\mu$m) et une densité apparente inférieure à 200 g/litre.

Ces silices peuvent être incorporées telles quelles, puis éventuellement être traitées par un ou des composés organosiliciques habituellement utilisés pour cet usage. Ces silices peuvent aussi être incorporées après un traitement par un tel composé organosilicique. Parmi ces composés, figurent les méthylpolysiloxanes tels que l'hexaméthyldisiloxane, l'octaméthylcyclotétrasiloxane, les méthylpolysilazanes tels que l'hexaméthyldisilazane, l'hexaméthylcyclotrisilazane, les chlorosilanes tels que le diméthyldichlorosilane, le triméthylchlorosilane, le méthylvinyldichlorosilane, le diméthylvinylchlorosilane, les alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %.

On peut aussi utiliser en sus ou à la place des charges siliceuses d'autres charges minérales telles que quartz broyé, argiles calcinées et terres de diatomées.

En ce qui concerne les matières minérales non siliceuses, elles peuvent intervenir comme charge minérale semi-renforçante, de bourrage ou à propriétés spécifiques. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,001 et 300 $\mu$m et une surface spécifique BET inférieure à 100 $m^2/g$.

On peut généralement utiliser de 0,5 à 50 % en poids, de préférence de 10 à 25 % en poids de charge, par rapport au poids de la phase silicone de la formule.

Préférentiellement, la formule d'organopolysiloxane comprend en outre un ou plusieurs promoteurs d'adhérence. Il peut s'agir des promoteurs classiquement utilisés.

Toutefois, dans le cas des formules de polyaddition, les promoteurs d'adhérence sont notamment choisis dans le groupe formé par :

- les organosilanes alcoxylés contenant, par molécule, au moins un groupe alcényle en $C_2$-$C_6$,
- les composés organosiliciés comprenant au moins un radical époxy, et
- les chélates de métaux M et/ou les alcoxydes métalliques de formule générale :

  $M(OJ)_n$, avec n= valence de M et J = alkyle linéaire ou ramifié en $C_1$-$C_8$, M étant choisi dans le groupe formé de : Ti, Zr, Ge, Li, Mn, Fe, Al, Mg.

Il peut notamment s'agir d'un mélange promoteur d'adhérence comprenant au moins un composé choisi parmi les trois groupes définis ci-dessus.

Conformément à une disposition préférée de l'invention, l'organosilane alcoxylé est plus particulièrement sélectionné parmi les produits de formule générale suivante :

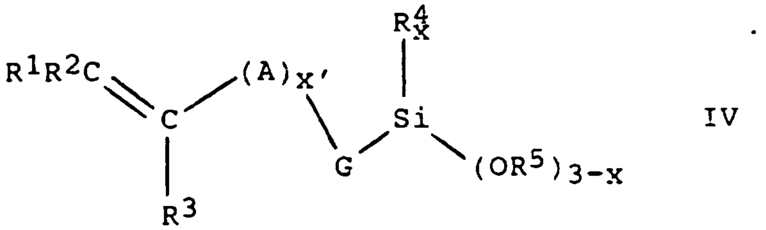

IV

dans laquelle :

- $R^1$, $R^2$, $R^3$ sont des radicaux hydrogénés ou hydrocarbonés identiques ou différents et représentent, de préférence, l'hydrogène, un alkyle linéaire ou ramifié en $C_1$-$C_4$,
  ou un phényle éventuellement substitué par au moins un alkyle en $C_1$-$C_3$,
- A est un alkylène linéaire ou ramifié en $C_1$-$C_4$,
- G est un lien valenciel ou l'oxygène,
- $R^4$ et $R^5$ sont des radicaux identiques ou différents et représentent un alkyle en $C_1$-$C_4$ linéaire ou ramifié,
- x' = 0 ou 1,
- x = 0 à 3, de préférence 0 ou 1 et plus préférentiellement encore 0.

Sans que cela soit limitatif, il peut être considéré que le vinyltriméthoxysilane est un composé (IV) particulièrement approprié.

S'agissant du composé organosilicié, il est prévu conformément à l'invention de le choisir préférentiellement:

- soit parmi les produits répondant à la formule générale suivante :

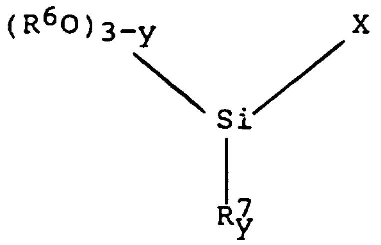

V

dans laquelle :

a . $R^6$ est un radical alkyle linéaire ou ramifié en $C_1$-$C_4$,
b . $R^7$ est un radical alkyle linéaire ou ramifié
c . y est égal à 0, 1, 2 ou 3, de préférence à 0 ou 1 et, plus préférentiellement encore, à 0,

d . 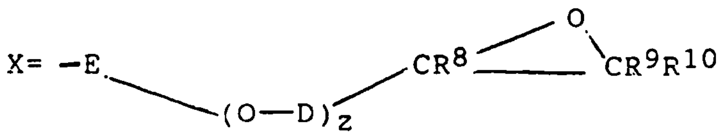

avec

° E et D étant des radicaux identiques ou différents choisis parmi les alkyles en $C_1$-$C_4$ linéaires ou ramifiés;
° z qui est égal à 0 ou 1,
° $R^8$, $R^9$, $R^{10}$ étant des radicaux identiques ou différents représentant l'hydrogène ou un alkyle linéaire ou ramifié en $C_1$-$C_4$, l'hydrogène étant plus particulièrement préféré,
° $R^8$ et $R^9$ ou $R^{10}$ pouvant alternativement constituer ensemble avec les deux carbones porteurs de l'époxy, un cycle alkyle ayant de 5 à 7 chaînons,

- soit parmi les produits constitués par des polyorganosiloxanes époxyfonctionnels comportant au moins un motif de formule :

$$X_pG_qSiO_{\frac{4-(p+q)}{2}} \quad VI$$

dans laquelle :

. X est le radical tel que défini ci-dessus pour_ la formule V,
. G est un groupe hydrocarboné monovalent, exempt d'action défavorable sur l'activité du catalyseur et choisi, de préférence, parmi les groupes alkyles ayant de 1 à 8 atomes de carbone inclus, éventuellement substitué par au moins un atome d'halogène, avantageusement parmi les groupes méthyle, éthyle, propyle et 3,3,3-trifluoropropyle ainsi que parmi les groupes aryles et, avantageusement, parmi les radicaux xylyle, tolyle et phényle,
. p = 1 ou 2,
. q = 0, 1 ou 2
. p + q = 1, 2 ou 3

éventuellement au moins une partie des autres motifs de ces polydiorganosiloxanes sont des motifs de formule moyenne :

$$G_rSiO_{\frac{4-r}{2}} \quad VII$$

dans laquelle G a la même signification que ci-dessus et r a une valeur comprise entre 0 et 3, par exemple entre 1 et 3.

Les composés organosiliciés sont donc préférentiellement des époxyalcoxysiliciés et plus préférentiellement encore des époxyalcoxymonosilanes.

A titre d'exemple de tels composés, on peut citer :

le 3-glycidoxypropyltriméthoxysilane (GLYMO)
ou le 3,4-époxycyclohexyléthyltriméthoxysilane.

En ce qui concerne le dernier groupe, les produits préférés sont ceux dans lesquels le métal M est choisi dans la liste suivante : Ti, Zr, Ge, Li, Mn. Il est à souligner que le titane est plus particulièrement préféré. On peut lui associer, par exemple, un radical alkyle de type butyle.

En ce qui concerne les compositions de polycondensation, on utilisera avantageusement comme promoteurs d'adhérence des composés appartenant à la famille des silanes aminés, tels que aminoorganosilanes, aminoorganopolysiloxanes et guanidinoorganosilanes portant par molécule à la fois : (i) au moins un groupe organique en $C_3$-$C_{15}$ lié par une liaison SiC à l'atome de silicium et substitué par au moins un radical amino ou un radical guanidino et (ii) au moins un radical alkoxy en $C_1$-$C_6$ ou un radical alkoxyalkylène-oxy en $C_3$-$C_6$. On peut en particulier citer les silanes de formule :

$H_2N(CH_2)_3Si(OCH_3)_3$

$H_2N(CH_2)_3Si(OC_2H_5)_3$

$H_2N(CH_2)_2NH(CH_2)_3Si(OCH_3)_3$

Il peut aussi s'agir de silanes époxydés (composés organosiliciés ayant au moins un radical époxy) tels que décrits ci-dessus pour les compositions de polyaddition.

Pour avoir plus de détails sur la synthèse des oxganosiloxanes et sur leur utilisation pour préparer des compositions organopolysiloxanes monocomposantes réticulant à température ambiante par des réactions de polycondensation sous l'action de l'humidité, on pourra se reporter tout particulièrement au brevet FR-A-2 638 752.

Les formules préférées pour polyaddition sont d'une façon générale une association :

. de 0 à 80 % d'une dispersion de silice colloïdale dans une huile silicone divinylée. La silice est une charge renforçante de surface spécifique comprise entre 50 et 400 $m^2/g$ ; il y en a entre 10 et 60% dans la dispersion.
. de 10 à 90 % d'une huile $\alpha,\omega$ divinylée dont la teneur en groupements vinyles est comprise entre 2 et 100 meq/100g.
. de 0 à 10 % d'une huile $\alpha,\omega$ dihydrogéno dont la teneur en groupements hydrogéno est comprise entre 30 et 300 meq/100g.
. de 1 à 10 % d'une huile polyhydrogéno dont la teneur en groupements hydrogène est comprise entre 100 et 1600 meq/100g.
. de préférence un promoteur d'adhérence :

de 0 à 5 % d'un mélange de silanes choisis dans la gamme des insaturés et des époxydiques ;
de 0 à 3 % d'un chélate et/ou d'un alcoxyde métalliques ;

. d'un catalyseur de polyaddition à raison de 2 à 50 ppm de platine ;
. éventuellement une résine polyorganosiloxane ayant des restes vinyles, en particulier résine de structure MDQ.

Les formules préférées pour polycondensation sont d'une façon générale une association :

- de 0 à 80 % d'une, dispersion de silice colloïdale dans une huile silicone hydroxylée. La silice est une charge renforçante de surface spécifique comprise entre 50 et 400 $m^2/g$ ; il y en a entre 10 et 50 % dans la dispersion.

- de 10 à 90 % d'une huile α,ω dihydroxylée dont la teneur en groupements hydroxyles est comprise entre 1 et 20 meq/100g.
- de 10 à 40 % d'une résine MQ dont la teneur en groupements hydroxyles est comprise entre 30 et 200 meq/100g.
- de préférence un promoteur d'adhérence :

  de 0 à 5 % d'un silane choisi dans la gamme des aminés et des époxydiques ;

- de 1 à 10 % d'un catalyseur de polycondensation.

La présente invention a aussi pour objet une méthode de préparation d'une émulsion aqueuse de polyorganosiloxane du type décrit plus haut selon la revendication 24. Si besoin est, on peut effectuer un affinage de l'émulsion par un moyen connu en soi, tel qu'un broyeur.

La présente invention a également pour objet un procédé d'enduction d'une matière textile ou analogue, à l'aide d'une émulsion aqueuse polyorganosiloxane telle que définie ci-dessus, de manière générale par mise en émulsion d'une formule de polyorganosiloxane telle que défini ci-dessus ou telle qu'obtenue par la méthode ci-dessus, procédé dans lequel on applique une couche de l'émulsion sur l'une ou les deux faces de la matière textile, puis l'on réticule, de manière à obtenir une matière textile revêtue, sur l'une au moins de ses faces, d'une couche d'élastomère, de préférence inférieure à 40 g/m$^2$, notamment comprise entre 5 et 40 g/m$^2$. En cas d'émulsion à deux composants, le procédé comprend une étape préalable consistant dans le mélange des deux composants.

L'étape d'enduction peut notamment être réalisée par racle, en particulier par racle sur cylindre, racle en l'air et racle sur tapis, ou par foulardage, c'est-à-dire par exprimage entre deux rouleaux, ou encore par rouleau lécheur, cadre rotatif, rouleau inverse "reverse roll", transfert, pulvérisation.

On peut enduire l'une ou les deux faces de la matière textile, l'enduction des deux faces étant alors avantageusement réalisée par foulardage après imprégnation du tissu avec l'émulsion. Pour une enduction sur deux faces, par foulardage, on présente de préférence le tissu verticalement entre les deux rouleaux où l'émulsion est déposée en continu. Pour une enduction sur une seule face par foulardage, on présente plutôt le tissu horizontalement entre les rouleaux. Après passage entre les rouleaux, le tissu est enduit uniformément d'une couche fine d'émulsion. On procède ensuite au séchage et à la réticulation, de préférence par air chaud ou infra-rouges, notamment de 30 s à 5 min, à une température de réticulation sans dépasser la température de dégradation du substrat.

La racle est destinée à l'enduction sur une seule face. L'émulsion est déposée en continu sur la face supérieure du tissu, puis passe sous la racle, avant séchage et réticulation comme ci-dessus.

La présente invention a également pour objet des matières textiles ou analogues enduites conformément à la présente invention. Elle a en particulier pour objet les sacs gonflables de type "air bag", les tresses de verre, bandes transporteuses, tissus coupe-feu ou isolants thermiques, compensateurs, tentes et vêtements, enduits conformément à l'invention.

L'invention va être maintenant décrite plus en détail à l'aide d'exemples de réalisation non limitatifs.

**Procédé d'enduction**

a) Par racle sur cylindre.

La racle est réglée à l'épaisseur minimale (entre 0 et 5 μm) au-dessus du tissu pour que celui-ci puisse juste passer entre la racle et le cylindre. L'émulsion est déposée en continu sur la face supérieure du tissu avant passage sous la râcle. Ensuite le tissu passe dans un four 1 minute à 150°C.

b) Par foulardage (exprimage entre deux rouleaux)

La pression des rouleaux est réglée à 2 bars. Soit le tissu arrive verticalement entre les rouleaux où l'émulsion est déposée en continu, le tissu se trouvant imprégné sur ses deux faces en sortie des rouleaux, soit le tissu arrive horizontalement entre les rouleaux et l'émulsion est déposée en continu sur la face supérieure du tissu qui se retrouve enduit sur une seule face après passage entre ces rouleaux. Ensuite le tissu passe dans un four 1 minute à 150°C.

Les tissus sont pesés avant et après enduction pour mesurer le poids déposé.

**Validation de la bonne réticulation et de l'adhérence sur tissu après enduction.**

En première approximation, on vérifie si le tissu enduit a un toucher sec après séchage en sortie de four. Ensuite, on évalue à la fois le niveau de réticulation et d'adhérence du revêtement élastomérique par un test de froissement selon la norme NF G 37 110 (comportement au froissement ou "scrub test"). La réticulation et l'adhérence sont

correctes si on atteint 200 froissements.

**Exemple polyaddition**

**I - En présence d'une charge**

Préparation des parties A et B de l'élastomère.

Cette opération est réalisée dans un mélangeur à bras de laboratoire. On mélange :

* partie A

505 g d'une dispersion à 30% en poids de silice colloïdale
hydrophobée dans de l'huile silicone ;
la silice développe 300 $m^2/g$ ; l'huile $\alpha,\omega$ divinylée titre 15 meq Vi/100g
417,6 g d'huile $\alpha,\omega$ divinylée qui titre 7 meq Vi/100 g
25,2 g d'huile $\alpha,\omega$ dihydrogéno qui titre 190 meq H/100g.
40,5 g d'huile polyhydrogéno qui titre 160 meq H/100 g
11,1 g de vinyl triméthoxysilane
0,6 g d'éthynylcyclohexanol

* partie B

521,7 g d'une dispersion à 30 % en poids de silice colloïdale
hydrophobée dans de l'huile silicone ;
la silice développe 300 $m^2/g$ et l'huile $\alpha,\omega$ divinylée titre 15 meq Vi/100 g
431 g d'huile $\alpha,\omega$ divinylée qui titre 7 meq Vi/100 g
45 g de titanate de butyle
2,3 g de catalyseur au platine qui titre 12 % en poids de platine

Mise en émulsion des parties A et B de l'élastomère.

L'émulsification se fait en réacteur de laboratoire en coulant la phase de silicone dans la moitié de son poids de solution d'alcool polyvinylique. Après mélange la formule est complétée avec le reste de l'eau. L'agitation est poursuivie pour affiner l'émulsion.

* émulsion A

500 g de partie A
475 g d'eau
25 g d'APV 25/140, c'est-à-dire de viscosité 25 et d'indice d'ester 140, commercialisé par Rhône Poulenc sous la marque Rhodoviol.

* émulsion B

500 g de partie B
475 g d'eau
25 g d'APV 25/140

Mise en oeuvre

Les émulsions A et B sont associées au moment de leur utilisation à raison de :

100 g émulsion A
10 g émulsion B

II - En l'absence de charge

* Préparation des parties A et B de l'élastomère renforcé par une résine silicone

**partie A**

300 g huile α,ω divinylée à 3 meq Vi/100 g
150 g huile α,ω divinylée à 5 meq Vi/100 g
480 g résine de polysiloxane vinylée à 22 meq Vi/100 g de viscosité 3,8 Pa.s
50 g huile polyhydrogéno à 690 meq H/100 g
10 g vinyl triméthoxysilane
10 g γ glycidoxypropyl triméthoxysilane
0,25 g éthynylcyclohexanol

**partie B**

363 g huile α,ω divinylée à 3 meq Vi/100 g
145 g huile α,ω divinylée à 5 meq Vi/100 g
446 g résine de polysiloxane vynilée à 22 meq Vi/100 g de viscosité 3,8 Pa.s
40 g titanate de butyle
1,8 g catalyseur qui titre 12 % de platine

*** Mise en émulsion**

comme dans I, avec

500 g partie A
485 g eau
15 g APV

500 g partie B
485 g eau
15 g APV

*** Mise en oeuvre :**

mélange à raison de 100 g émulsion A + 10 g émulsion B

*** Résultats du test sur tissu polyamide :**

avec 22 g/m2 déposés : 400 froissements

**Exemple polycondensation**

Préparation des parties A et B de l'élastomère

Cette opération est réalisée dans un mélangeur à bras de laboratoire. On mélange :

* partie A

500 g dispersion à 35% en poids de silice colloïdale hydrophobée dans de l'huile silicone ; la silice développe 300 $m^2/g$ ; l'huile hydroxylée titre 2 meq OH/100 g
375 g d'huile α,ω dihydroxy qui titre 5 meq OH/100 g
125 g d'une résine silicone MQ qui titre 55 meq OH/100 g

* partie B

1000 g de dilaurate de dioctyl étain

Mise en émulsion des parties A et B de l'élastomère.

L'émulsification se fait en réacteur de laboratoire en coulant la phase silicone dans la moitié de son poids de solution d'alcool polyvinylique. Après mélange la formule est complétée avec le reste de l'eau. L'agitation est poursuivie pour affiner l'émulsion.

* émulsion A

500 g de partie A
475 g d'eau
25 g d'APV 25/140

* émulsion B

500 g de partie B
480 g d'eau
20 g d'APV 25/140

Mise en oeuvre

Les émulsions A et B sont associées au moment de leur utilisation à raison de :

100 g émulsion A
5 g émulsion B

**Résultats**

Trois procédés d'enduction ont été utilisés :

- RC : râcle sur cylindre
- IF : imprégnation par foulardage
- BC : enduction une face par cylindre (variante de foulardage).

**1) Sur tissu polyamide 6,6 470 dtex 21x21 fils/cm désencollé avec :**

PA = formule de polyaddition avec charge de l'exemple ci-dessus
PC = formule de polycondensation de l'exemple ci-dessus Réticulation : 1 min à 150°C.

| Procédé | RC | IF | BC | RC | RC |
|---|---|---|---|---|---|
| Emulsion | PA | PA | PA | PC | PA |
| Toucher | sec | sec | sec | sec | sec |
| Poids déposé (g/$m^2$) | 25 | 20 | 20 | 20 | 40 |
| Nb froissements | 500 | 200 | 200 | 200 | 600 |

Le tissu polyamide est adapté à la fabrication des sacs gonflables de type "airbag". Les résultats avec les émulsions chargées selon l'invention montrent que l'on obtient un produit à fine couche d'enduction et ayant des propriétés compatibles avec l'usage sac gonflable.

**2) Sur tissu de verre 230 g/$m^2$.**

| | |
|---|---|
| Procédé | RC |
| Emulsion | PA |
| Réticulation | 1 min à 150°C |
| Toucher | sec |
| Poids déposé | 20 g/m$^2$ |
| Adhérence | Bonne |

Le test scrub n'étant pas adapté sur tissu de verre, l'adhérence est bonne lorsque le revêtement résiste à l'action d'un grattage prolongé à l'aide d'une spatule métallique. En outre, la découpe du tissu de verre est possible sans détramage de ce tissu.

## Revendications

**1.** Emulsion aqueuse de polyorganosiloxane, notamment pour l'enduction de matières textiles, en particulier supports tissés ou non tissés,
comprenant une formule organopolysiloxane précurseur de l'élastomère qui comporte un ou plusieurs polyorganosiloxanes, un catalyseur, une charge minérale, éventuellement un réticulant et/ou un promoteur d'adhérence, cette émulsion étant susceptible d'être obtenue par

(1) la formation de la formule organopolysiloxane dépourvue de tensioactif, éventuellement dans le cas de compositions bi-composant, de deux demi-formules dépourvues de tensioactif, puis
(2) la mise en émulsion directe de cette formule préformée dans une solution aqueuse d'hydrocolloïde protecteur ou la mise en émulsion directe de chacune des deux demi-formules, chacune dans une solution aqueuse d'hydrocolloïde protecteur puis leur réunion,

l'hydrocolloïde protecteur étant un alcool polyvinylique (APV), un mélange d'APV ou un polyester sulfoné hydrodispersable.

**2.** Emulsion selon la revendication 1, **caractérisée en ce que** la solution aqueuse d'APV a une viscosité dynamique type ($\eta_{dt}$) comprise entre 5, et 40 mPa.s, de préférence entre 10 et 30 mPa.s, et un indice d'ester supérieur ou égal à 80, de préférence à 100 et notamment compris entre 120 et 200.

**3.** Emulsion selon la revendication 1, **caractérisée en ce que** le polyester sulfoné hydrodispersable a une masse moléculaire moyenne en nombre comprise entre 10 000 et 35 000, un indice d'acide inférieur à 5 mg de KOH/g, un taux de soufre compris entré 0,8 et 2 % poids, de préférence entre 1,2 et 1,8 %.

**4.** Emulsion selon la revendication 1 ou 3, **caractérisée en ce que** le polyester sulfoné hydrosoluble est un polyéthylène téréphtalate sulfoné.

**5.** Emulsion selon l'une quelconque des revendications 1 à 4, **caractérisée en ce que** le rapport phase silicone/phase hydrocolloïde protecteur est choisi de façon à avoir un ratio extrait sec compris entre 10 et 60, de préférence entre 40 et 60.

**6.** Emulsion selon l'une quelconque des revendications 1 à 5, **caractérisée en ce que** la solution aqueuse d'hydrocolloïde protecteur comprend en outre un tensio-actif, de préférence un tensio-actif non ionique.

**7.** Emulsion selon la revendication 6, **caractérisée en ce que** la tensio-actif est un alcool gras polyéthoxylé.

**8.** Emulsion selon la revendication 6 ou 7, **caractérisée en ce que** le ratio tensio-actif/hydrocolloïde protecteur est compris entre 0 et 10 %.

**9.** Emulsion selon l'une quelconque des revendications 1 à 8, **caractérisée en ce que** la formule organopolysiloxane est choisie parmi le groupe formé des formules pour élastomère vulcanisable à froid, de polyaddition ou de polycondensation.

**10.** Emulsion selon la revendication 9, **caractérisée en ce que** la formule de polyorganosiloxane est une formule de polyaddition ou de polycondensation et comprend en outre au moins une résine polyorganosiloxane.

**11.** Emulsion selon la revendication 10, **caractérisée en ce** la formule de polyorganosiloxane est une formule de polycondensation et comprend en outre une résine hydroxylée.

**12.** Emulsion selon l'une quelconque des revendications 1 à 11, **caractérisée en ce qu'**elle comprend une charge choisie parmi les silices de combustion et les silices de précipitation.

**13.** Emulsion selon la revendication 12, **caractérisée en ce que** les silices ont une surface spécifique BET d'au moins 50 $m^2$/g, notamment comprise entre 50 et 400 $m^2$/g, et une dimension moyenne des particules primaires inférieures à 0,1 micromètre et une densité apparente inférieure à 200 g/l.

**14.** Emulsion selon la revendication 13, **caractérisée en ce que** les silices sont traitées par un ou des composés organosiliciques.

**15.** Emulsion selon la revendication 14, **caractérisée en ce que** les silices sont traitées par un ou des composés organosiliciques choisis parmi le groupe formé des méthylpolysiloxanes tels que l'hexaméthyldisiloxane, l'octaméthylcyclotétrasiloxane, les méthylpolysilazanes tels que l'hexaméthyldisilazane, l'hexaméthylcyclotrisilazane, les chlorosilanes tels que le diméthyldichlorosilane, le triméthylchlorosilane, le méthylvinyldichlorosilane, le diméthylvinylchlorosilane, les alcoxysilanes tels que le diméthyldiméthoxysilane, le diméthylvinyléthoxysilane, le triméthylméthoxysilane.

**16.** Emulsion selon l'une des revendications 12 à 15, **caractérisée en ce que** la charge comprend en outre une ou plusieurs charges minérales telles que quartz broyé, argiles calcinées et terres de diatomées.

**17.** Emulsion selon l'une des revendications 12 à 16, **caractérisée en ce que** la formule comprend de 0,5 à 50 % en poids, de préférence de 10 à 25 % en poids de charge, par rapport au poids du constituant organopolysiloxane.

**18.** Emulsion selon, l'une quelconque des revendications 1 à 17, **caractérisée en ce que** la formule d'organopolysiloxane comprend en outre un ou plusieurs promoteurs d'adhérence.

**19.** Emulsion selon la revendication 18, **caractérisée en ce que** la formule d'organopolysiloxane est une formule de polyaddition et **en ce que** le ou les promoteurs d'adhérence sont choisis parmi le groupe formé par :

- les organosilanes alcoxylés contenant, par molécule, au moins un groupe alcényle en $C_2$-$C_6$,
- les composés organosiliciés comprenant au moins un radical époxy et,
- les chélates de métaux M et/ou les alcoxydes métalliques de formule générale :

$M(OJ)_n$, avec n= valence de M et J = alkyle linéaire ou ramifié en $C_1$-$C_8$, M étant choisi dans le groupe formé de : Ti, Zr, Ge, Li, Mn, Fe, Al, Mg.

**20.** Emulsion selon la revendication 18, **caractérisée en ce que** la formule d'organopolysiloxane est une formule de polycondensation et **en ce que** le ou les promoteurs d'adhérence sont choisis parmi le groupe comportant les silanes aminés, tels que aminoorganosilanes, aminoorganopolysiloxanes, guanidinoorganosilanes, et les silanes époxydés.

**21.** Emulsion selon l'une des revendications 1 à 10 et 12 à 19, **caractérisée en ce qu'**elle comprend, comme formule de polyaddition :

. de 0 à 80 % d'une dispersion de silice colloïdale dans une huile silicone divinylée, à raison de 10 à 60% de silice dans la dispersion,
. de 10 à 90 % d'une huile $\alpha,\omega$ divinylée dont la teneur en groupements vinyles est comprise entre 2 et 100 meq/100g,
. de 0 à 10 % d'une huile $\alpha,\omega$ dihydrogéno dont la teneur en groupements hydrogéno est comprise entre 30 et 300 meq/100g,
. de 1 à 10 % d'une huile polyhydrogéno dont la teneur en groupements hydrogéno est comprise entre 100 et 1600 meq/100g,

. de préférence un promoteur d'adhérence :

de 0 à 5 % d'un mélange de silanes choisis dans la gamme des insaturés et des époxydigues ;
de 0 à 3 % d'un chélate et/ou d'un alcoxyde métalliques,

. d'un catalyseur de polyaddition à raison de 2 à 50 ppm de platine,
. éventuellement une résine polyorganosiloxane ayant des restes vinyles, en particulier résine de structure MDQ.

**22.** Emulsion selon l'une des revendications 1 à 18 et 20, **caractérisée en ce qu'**elle comprend, comme formule de polycondensation :

. de 0 à 80 % d'une dispersion de silice colloïdale dans une huile silicone hydroxylée, à raison de 10 à 50 % de silice dans la dispersion,
. de 10 à 90 % d'une huile $\alpha,\omega$ dihydroxylée dont la teneur en groupements hydroxyles est comprise entre 0,1 et 20 meq/100g,
. de 10 à 40 % d'une résine MQ dont la teneur en groupements hydroxyles est comprise entre 30 et 200 meq/100g,
. de préférence un promoteur d'adhérence :

de 0 à 5 % d'un silane choisi dans la gamme des aminés et des époxydiques,

. de 1 à 10 % d'un catalyseur de polycondensation.

**23.** Kit, destiné à la réalisation d'une émulsion aqueuse de polyorganosiloxane selon l'une des revendications 1 à 22, comprenant deux parties de la formule de polyorganosiloxane dont la réunion forme la formule organopolysiloxane précurseur de l'élastomère, chaque partie de formule étant en émulsion dans une solution aqueuse d'hydrocolloïde protecteur, chaque émulsion étant obtenue par mise en émulsion directe de la partie de formule dans une solution aqueuse d'hydrocolloïde protecteur.

**24.** Méthode de préparation d'une émulsion aqueuse de polyorganosiloxane selon l'une quelconque des revendications 1 à 22, la méthode comprenant :

(1) la formation d'une formule organopolysiloxane, précurseur de l'élastomère, à partir d'un ou plusieurs polyorganosiloxanes, d'un catalyseur, d'une charge minérale, éventuellement d'un réticulant et/ou d'un promoteur d'adhérence, cette formule étant dépourvue de tensioactif, éventuellement dans le cas de compositions bi-composant, la formation en deux demi-formules dépourvues de tensioactif, puis
(2) la mise en émulsion directe de cette formule préformée dans une solution aqueuse d'hydrocolloïde protecteur ou la mise en émulsion directe de chacune des deux demi-formules, chacune dans une solution aqueuse d'hydrocolloïde protecteur,

les émulsions obtenues étant conservées séparément jusqu'à leur réunion,
l'hydrocolloïde protecteur étant un alcool polyvinylique (APV), un mélange d'APV ou un polyester sulfoné hydrodispersable.

**25.** Méthode selon la revendication 24, **caractérisée en ce que** dans le cas d'une formule précurseur bi-composant, chaque partie de formule préalablement préparée est mise en émulsion dans sa part de solution aqueuse d'hydrocolloïde protecteur et les émulsions obtenues sont conservées séparément.

**26.** Procédé d'enduction d'une matière textile ou analogue à l'aide d'une émulsion aqueuse de polyorganosiloxane selon l'une quelconque des revendications 1 à 22 ou d'un kit selon la revendication 23, **caractérisé en ce que** l'on applique une couche de l'émulsion sur l'une ou les deux faces de la matière textile, puis on réticule de manière à obtenir une matière textile revêtue, sur l'une au moins de ses faces, d'une couche d'élastomère, de préférence, inférieure à 40 $g/m^2$, notamment comprise entre 5 et 40 $g/m^2$.

**27.** Procédé selon la revendication 26, **caractérisée en ce que** l'enduction est réalisée par racle ou par foulardage.

**28.** Produit susceptible d'être obtenu par le procédé selon là revendication 26 ou 27, ledit procédé mettant en oeuvre une émulsion préparée en présence d'un alcool polyvinylique ou d'un polyester sulfoné hydrodispersable.

## Claims

1. Aqueous polyorganosiloxane, in particular for the coating of textile materials, in particular woven or non-woven supports, which contains an organopolysiloxane elastomer precursor formula which contains one or more poly organosiloxanes, a catalyst, a mineral filler and possibly a cross-linking agent and/or an adhesion promoter. where it is possible to obtain this emulsion by

   (1) the formation of the organopolysiloxane formula free of any surfactants, if necessary in the case of bi-component compositions, from two surfactant-free half-formulae, then
   (2) the direct emulsification of the preformed formula in an aqueous protective hydrocolloid solution or the direct emulsification of each of the two half-formulae each in an aqueous protective hydrocolloid solution, and then combining them, where the protective hydrocolloid is a polyvinyl alcohol (PVA), a PVA blend or a water-dispersible sulphonated polyester.

2. Emulsion according to claim 1 **characterised by** the fact that the aqueous PVA solution has a typical dynamic viscosity ($\eta$dt) of between 5 and 40 mPa.s, preferably between 10 and 30 mPa.s, and an ester index which is equal to or greater than 80, preferably greater than 100 and in particular between 120 and 200.

3. Emulsion according to claim 1 **characterised by** the fact that the water dispersible sulphonated polyester has a number average molecular mass of between 10,000 and 35,000, an acid index of less than 5 mg of KOH/g, sulphur levels between 0.8 and 2% by weight, preferably between 1.2% and 1.8%.

4. Emulsion according to claim 1 or 3 **characterised by** the fact that the hydrosoluble sulphonated polyester is a sulphonated polyethylene terephthalate.

5. Emulsion according to any of claims 1 to 4 whatsoever, **characterised by** the fact that the silicone phase/protective hydrocolloid phase ratio is chosen so that the dry extract ratio obtained is between 10 and 60, preferably between 40 and 60.

6. Emulsion according to any of claims 1 to 5, **characterised by** the fact that the aqueous protective hydrocolloid solution includes in addition a surfactant, preferably a non-ionic surfactant.

7. Emulsion according to claim 6 **characterised by** the fact that the surfactant is a polyethoxylated fatty alcohol.

8. Emulsion according to claim 6 or 7 **characterised by** the fact that the surfactant/protective hydrocolloid ratio is between 0 and 10%.

9. Emulsion according to any of claims 1 to 8 whatsoever, **characterised by** the fact that the organopolysiloxane formula is a formulae for cold vulcanised elastomers, by polyaddition or polycondensation.

10. Emulsion according to claim 9 **characterised by** the fact that the polyorganosiloxane formula is a polyaddition or polycondensation formula and that it includes, in addition, at least one polyorganosiloxane resin.

11. Emulsion according to claim 10 **characterised by** the fact that the polyorganosiloxane formula is a polycondensation formula and that it includes in addition a hydroxylated resin.

12. Emulsion according to any of claims 1 to 11 whatsoever, **characterised by** the fact that it includes a filler which is combustion silica or precipitation silica.

13. Emulsion according to claim 12, **characterised by** the fact that the silicas have a BET specific surface area of at least 50 $m^2/g$, in particular between 50 and 400 $m^2/g$, and a mean primary particle dimension of less than 0.1 micrometers and an apparent density of less than 200 g/l.

14. Emulsion according to claim 13 **characterised by** the fact that the silicas are treated using one or more organosilicon compounds

15. Emulsion according to claim 14 **characterised by** the fact that the silicas are treated using one or more organosilicon compounds which are methylpolysiloxanes such as hexamethyldisiloxane, octamethylcyclotetrasiloxane, methylpolysilazanes such as hexamethyldisilazane, hexamethylcyclotrisilazane, chlorosilanes such as dimethyldichlorosilane, trimethylchlorosilane, methylvinyldichlorosilane, dimethylvinylchlorosilane, alkoxysilanes such as dimethyldimethoxysilane, dimethylvinylethoxysilane and trimethylmethoxysilane.

**16.** Emulsion according to claims 12 to 15, **characterised by** the fact that in addition the filler includes one or more mineral fillers such as crushed quartz, calcined clays and diatomaceous earths.

**17.** Emulsion according to claims 12 to 16, **characterised by** the fact that the formula contains 0.5% to 50% by weight, preferably 10 to 25% by weight, of filler, in relation to the weight of the organopolysiloxane constituent.

**18.** Emulsion according to any of claims 1 to 17 whatsoever, **characterised by** the fact that the organopolysiloxane formula in addition includes one or more adhesion promoters.

**19.** Emulsion according to claim 18 **characterised by** the fact that the organopolysiloxane formula is a polyaddition formula and that the adhesion promoter(s) is (are):

- alkoxylated organosiloxanes which contain at least one $C_2$-$C_6$ alkenyl group per molecule,
- organosilicon compounds which contain at least one epoxy group and
- Metal chelates M and/or metal alkoxides with the general formula:

  M $(OJ)_n$, where n= the valence of M, and J = linear or branched $C_1$-$C_8$ alkyl, where M is selected from: Ti, Zr, Ge, Li, Mn, Fe, Al, and Mg

**20.** Emulsion according to claim 18 **characterised by** the fact that the organopolysiloxane formula is a polycondensation formula and that the adhesion promoters are from a group which includes amino silanes, such as aminoorganosilanes, aminoorganopolysiloxanes, guanidineorganosilanes and epoxy containing silanes.

**21.** Emulsion according to claims 1 to 10, and 12 to 19 **characterised by** the fact that it includes as a polyaddition formula

. from 0 to 80 % of a dispersion of colloidal silica in divinylated silicone oil, at a level of 10 to 60% of silica in the dispersion.
. from 10 to 90 % of an $\alpha,\omega$ divinylated oil whose vinyl group content is between 2 and 100 meq/100g.
. from 0 to 10 % of an $\alpha,\omega$ dihydrogenated oil whose hydrogen group content is between 30 and 300 meq/100g.
. from 1 to 10 % of a polyhydrogenated oil whose hydrogen group content is between 100 and 1600 meq/100g.
. preferably an adhesion promoter:

from 0 to 5 % of a blend of silanes which are unsaturated and epoxy containing silanes;
from 0 to 3 % of a metal chelate and/or alkoxide;

. a polyaddition catalyst at a level of from 2 to 50 ppm of platinum;
. possibly a polyorganosiloxane resin which has vinyl remainders, in particular an MDQ structure resin,

**22.** Emulsion according to claims 1 to 18 and 20 **characterised by** the fact that it includes as a polycondensation formula

. from 0 to 80 % of a dispersion of colloidal silica in a hydroxylated silicone oil, with a level of 10 to 50 % of silica in the dispersion.
. from 10 to 90 % of an $\alpha,\omega$ dihydroxylated oil whose hydroxyl group content is between 0.1 and 20 meq/100g.
. from 10 to 40 % of an MQ resin whose hydroxyl group content is between 30 and 200 meq/100g.
. preferably an adhesion promoter:

from 0 to 5 % of a silane which is aminated or an epoxysilane,
from 1 to 10 % of a polycondensation catalyst.

**23.** A kit, designed for the production of an aqueous polyorganosiloxane emulsion according to one of claims 1 to 22 which includes two parts of the polyorganosiloxane formula which when combined form the elastomer precursor organopolysiloxane formula, with each part of the formula being in an emulsion in an aqueous protective hydrocolloid solution, with each emulsion being obtained by the direct emulsification of the part of the formula in an aqueous protective hydrocolloid solution.

**24.** Method for the preparation of an aqueous polyorganosiloxane according to any of claims 1 to 22 whatsoever, where the method involves:

(1) the formation of an elastomer precursor organopolysiloxane formula, from one or more poly organosiloxanes, a catalyst, a mineral filler and perhaps a cross-linking agent and/or an adhesion promoter, with this formula being free of surfactant, with possibly in the case of bi-component compositions, the formation as two surfactant-free half-formulae then
(2) the direct emulsification of this preformed formula in an aqueous protective hydrocolloid solution or the direct emulsification of each of the two half-formulae, each in an aqueous protective hydrocolloid solution, with the emulsions obtained being kept separate until they are combined, where the protective hydrocolloid is a polyvinyl alcohol (PVA), a PVA blend or a water-dispersible sulphonated polyester.

**25.** Method according to claim 24, **characterised by** the fact that in the case of a bi-component precursor formula, each part of the formula prepared beforehand is emulsified in its own portion of aqueous protective hydrocolloid and the emulsions are kept separate.

**26.** Procedure for coating a textile or analogous material using an aqueous polyorganosiloxane emulsion according to any of claims 1 to 22 whatsoever, or a kit according to claim 23, **characterised by** the fact that a layer of emulsion is applied to one or both sides of the textile material, then cross-linking is carried out so as to obtain a textile material which is coated, on at least one of its sides with a layer of elastomer, preferably of less than 40 $g/m^2$, and in particular between 5 and 40 $g/m^2$.

**27.** Procedure according to claim 26, **characterised by** the fact that the coating is achieved using a doctor blade or by padding.

**28.** Product which might be obtained by the process according to claim 26 or 27, with the said process using an emulsion prepared in the presence of a polyvinyl alcohol or a water-dispersible sulphonated polyester.

**Patentansprüche**

**1.** Wässrige Polyorganosiloxanemulsion, insbesondere für das Beschichten von Textilien, speziell gewebten oder Nonwoven-Trägern, welche eine Polyorganosiloxanformulierung, die der Vorläufer für ein Elastomer ist und ein oder mehrere Polyorganosiloxane enthält, einen Initiator, einen anorganischen Füllstoff und gegebenenfalls ein Vernetzungsmittel und/oder einen Haftvermittler umfasst, wobei diese Emulsion durch

(1) Bilden der tensidfreien Polyorganosiloxanformulierung, gegebenenfalls bei Zweikomponentenzusammensetzungen von zwei tensidfreien Formulierungshälften,
(2) direktes Emulgieren dieser vorgebildeten Formulierung in einer wässrigen Lösung eines Schutzhydrokolloids oder direktes Emulgieren der beiden Formulierungshälften jeweils in einer wässrigen Lösung eines Schutzhydrokolloids und anschließend

ihre Vereinigung erhalten werden kann, wobei das Schutzhydrokolloid ein Polyvinylalkohol (PVA), ein PVA-Gemisch oder ein wasserdispergierbarer sulfonierter Polyester ist.

**2.** Emulsion nach Anspruch 1, **dadurch gekennzeichnet, dass** die wässrige PVA-Lösung eine dynamische Viskosität ($\eta_{dt}$) von 5 bis 40 mPa·s und vorzugsweise zwischen 10 und 30 mPa·s und eine Esterzahl von größer als oder gleich 80 und vorzugsweise 100 und insbesondere von 120 bis 200 besitzt.

**3.** Emulsion nach Anspruch 1, **dadurch gekennzeichnet, dass** der wasserdispergierbare sulfonierte Polyester ein Zahlenmittel des Molekulargewichts von 10 000 bis 35 000, eine Säurezahl von weniger als 5 mg KOH/g und einen Schwefelgehalt von 0,8 bis 2 Gew.-% und vorzugsweise zwischen 1,2 und 1,8 % besitzt.

**4.** Emulsion nach Anspruch 1 oder 3, **dadurch gekennzeichnet, dass** der wasserlösliche sulfonierte Polyester ein sulfoniertes Polyethylenterephthalat ist.

**5.** Emulsion nach einem der Ansprüche 1 bis 4, **dadurch gekennzeichnet, dass** das Verhältnis von Siliconphase/ Schutzhydrokolloidphase derart ausgewählt ist, dass ein Verhältnis der Trockensubstanzen von 10 bis 60 und

vorzugsweise zwischen 40 und 60 erhalten wird.

6. Emulsion nach einem der Ansprüche 1 bis 5, **dadurch gekennzeichnet, dass** die wässrige Lösung des Schutzhydrokolloids außerdem ein Tensid, vorzugsweise ein nicht-ionisches Tensid, enthält.

7. Emulsion nach Anspruch 6, **dadurch gekennzeichnet, dass** das Tensid ein polyethoxylierter Fettalkohol ist.

8. Emulsion nach Anspruch 6 oder 7, **dadurch gekennzeichnet, dass** das Verhältnis von Tensid/Schutzhydrokolloid zwischen 0 und 10 % beträgt.

9. Emulsion nach einem der Ansprüche 1 bis 8, **dadurch gekennzeichnet, dass** die Polyorganosiloxanformulierung aus der Gruppe ausgewählt ist, die von Formulierungen für kalt vulkanisierbare Elastomere und Polyadditions- oder Polykondensationsformulierungen gebildet wird.

10. Emulsion nach Anspruch 9, **dadurch gekennzeichnet, dass** die Polyorganosiloxanformulierung eine Polyadditions- oder Polykondensationsformulierung ist und außerdem mindestens ein Polyorganosiloxanharz umfasst.

11. Emulsion nach Anspruch 10, **dadurch gekennzeichnet, dass** die Polyorganosiloxanformulierung eine Polykondensationsformulierung ist und außerdem ein hydroxyliertes Harz umfasst.

12. Emulsion nach einem der Ansprüche 1 bis 11, **dadurch gekennzeichnet, dass** sie einen Füllstoff enthält, der aus pyrogener Kieselsäure und Fällungskieselsäure ausgewählt ist.

13. Emulsion nach Anspruch 12, **dadurch gekennzeichnet, dass** die Kieselsäuren eine spezifische BET-Oberfläche von mindestens 50 $m^2/g$ und insbesondere von 50 bis 400 $m^2/g$, eine mittlere Größe der primären Teilchen von unter 0,1 Mikrometer und eine Schüttdichte von unter 200 g/l haben.

14. Emulsion nach Anspruch 13, **dadurch gekennzeichnet, dass** die Kieselsäuren mit einer oder mehreren siliciumorganischen Verbindungen behandelt worden sind.

15. Emulsion nach Anspruch 14, **dadurch gekennzeichnet, dass** die Kieselsäuren mit einer oder mehreren siliciumorganischen Verbindungen behandelt worden sind, die aus der Gruppe ausgewählt sind, die von Methylpolysiloxanen wie Hexamethyldisiloxan und Octamethylcyclotetrasiloxan, Methylpolysilazanen wie Hexamethyldisilazan und Hexamethylcyclotrisilazan, Chlorsilanen wie Dimethyldichlorsilan, Trimethylchlorsilan, Methylvinyldichlorsilan und Dimethylvinylchlorsilan und Alkoxysilanen wie Dimethyldimethoxysilan, Dimethylvinylethoxysilan und Trimethylmethoxysilan gebildet ist.

16. Emulsion nach einem der Ansprüche 12 bis 15, **dadurch gekennzeichnet, dass** der Füllstoff außerdem ein oder mehrere anorganische Füllstoffe wie zermahlenen Quarz, calcinierte Tone und Diatomeenerde umfasst.

17. Emulsion nach einem der Ansprüche 12 bis 16, **dadurch gekennzeichnet, dass** die Formulierung 0,5 bis 50 Gew.-% und vorzugsweise 10 bis 25 Gew.-% Füllstoff, bezogen auf das Gewicht des Polyorganosiloxanbestandteils, enthält.

18. Emulsion nach einem der Ansprüche 1 bis 17, **dadurch gekennzeichnet, dass** die Polyorganosiloxanformulierung außerdem einen oder mehrere Haftvermittler enthält.

19. Emulsion nach Anspruch 18, **dadurch gekennzeichnet, dass** die Polyorganosiloxanformulierung eine Polyadditionsformulierung ist, **und dass** der (die) Haftvermittler aus der Gruppe ausgewählt ist (sind), die von:

- alkoxylierten Organosilanen, die pro Molekül mindestens eine $C_2$- bis $C_6$-Alkenylgruppe enthalten,
- siliciumorganischen Verbindungen, die mindestens einen Epoxyrest enthalten, und
- Chelaten von Metallen M und/oder Metallalkoxiden mit der allgemeinen Formel $M(OJ)_n$, wobei n die Wertigkeit von M und J ein geradkettiges oder verzweigtes $C_1$- bis $C_8$-Alkyl bedeutet und M aus der Gruppe ausgewählt, die von Ti, Zr, Ge, Li, Mn, Fe, Al und Mg gebildet ist,

gebildet ist.

**20.** Emulsion nach Anspruch 18, **dadurch gekennzeichnet, dass** die Polyorganosiloxanformulierung eine Polykondensationsformulierung ist, **und dass** der (die) Haftvermittler aus der Gruppe ausgewählt ist (sind), die Aminosilane wie Aminoorganosilane, Aminoorganopolysiloxane und Guanidinoorganosilane und epoxidierte Silane umfasst.

**21.** Emulsion nach einem der Ansprüche 1 bis 10 und 12 bis 19, **dadurch gekennzeichnet, dass** sie als Polyadditionsformulierung umfasst:

- 0 bis 80 % einer Dispersion eines kolloidalen Siliciumdioxids in einem Divinylsiliconöl mit einem Anteil von 10 bis 60 % Siliciumdioxid an der Dispersion,
- 10 bis 90 % eines α,ω-Divinylöls, dessen Gehalt an Vinylgruppen 2 bis 100 mÄq/100 g beträgt,
- 0 bis 10 % eines α,ω-Dihydrogenöls, dessen Gehalt an Wasserstoffgruppen 30 bis 300 mÄq/100 g beträgt,
- 1 bis 10 % eines Polyhydrogenöls, dessen Gehalt an Wasserstoffgruppen 10 bis 1600 mÄq/100 g beträgt,
- vorzugsweise einen Haftvermittler mit 0 bis 5 % eines Gemischs aus Silanen, die aus der Klasse der ungesättigten und der epoxidierten Silane ausgewählt sind, und von 0 bis 3 % eines Chelats und/oder eines Metallalkoxids,
- einen Polyadditionsinitiator mit einem Anteil von 2 bis 50 ppm Platin und
- gegebenenfalls ein Polyorganosiloxanharz mit Vinylresten, insbesondere ein Harz mit der Struktur MDQ.

**22.** Emulsion nach einem der Ansprüche 1 bis 18 und 20, **dadurch gekennzeichnet, dass** sie als Polykondensationsformulierung umfasst:

- 0 bis 80 % einer Dispersion eines kolloidalen Siliciumdioxids in einem hydroxylierten Siliconöl mit einem Anteil von 10 bis 50 % Siliciumdioxid an der Dispersion,
- 10 bis 90 % eines α,ω-dihydroxylierten Öls, dessen Gehalt an Hydroxylgruppen 0,1 bis 20 mÄq/100 g beträgt,
- 10 bis 40 % eines MQ-Harzes, dessen Gehalt an Hydroxygruppen 30 bis 200 mÄq/100 g beträgt,
- vorzugsweise einen Haftvermittler mit 0 bis 5 % eines Silans, das aus der Klasse der Amino- und der epoxidierten Silane ausgewählt ist, und
- 1 bis 10 % eines Polykondensationsinitiators.

**23.** Kit, der für die Herstellung einer wässrigen Polyorganosiloxanemulsion nach einem der Ansprüche 1 bis 22 vorgesehen ist und zwei Teile der Polyorganosiloxanformulierung umfasst, durch deren Vereinigung die Vorläufer-Polyorganosiloxanformulierung für ein Elastomer gebildet wird, wobei jeder Teil der Formulierung als Emulsion in einer wässrigen Lösung eines Schutzhydrokolloids vorliegt und jede Emulsion durch direktes Emulgieren des Teils der Formulierung in einer wässrigen Lösung des Schutzhydrokolloids erhalten wird.

**24.** Verfahren zur Herstellung einer wässrigen Polyorganosiloxanemulsion nach einem der Ansprüche 1 bis 22, welches das:

(1) Bilden einer Polyorganosiloxanformulierung, die der Vorläufer für ein Elastomer ist, aus einem oder mehreren Polyorganosiloxanen, einem Initiator, einem anorganischen Füllstoff und gegebenenfalls einem Vernetzungsmittel und/oder einem Haftvermittler, wobei diese Formulierung tensidfrei ist, gegebenenfalls bei Zweikomponentenzusammensetzungen Bildung von zwei tensidfreien Formulierungshälften, und anschließend das
(2) direkte Emulgieren dieser vorgebildeten Formulierung in einer wässrigen Lösung eines Schutzhydrokolloids oder direkte Emulgieren der beiden Formulierungshälften jeweils in einer wässrigen Lösung eines Schutzhydrokolloids umfasst,

wobei die erhaltenen Emulsionen bis zu ihrer Vereinigung getrennt voneinander aufbewahrt werden und das Schutzhydrokolloid ein Polyvinylalkohol (PVA), ein PVA-Gemisch oder ein wasserdispergierbarer sulfonierter Polyester ist.

**25.** Verfahren nach Anspruch 24, **dadurch gekennzeichnet, dass** bei einer Zweikomponenten-Vorläuferformulierung jeder zuvor hergestellte Formulierungsteil in seinem Teil der wässrigen Schutzhydrokolloidlösung emulgiert wird und die erhaltenen Emulsionen getrennt voneinander aufbewahrt werden.

**26.** Verfahren zum Beschichten einer Textilie oder dergleichen mittels einer wässrigen Polyorganosiloxanemulsion nach einem der Ansprüche 1 bis 22 oder eines Kits nach Anspruch 23, **dadurch gekennzeichnet, dass** eine Emulsionsschicht auf einer Seite oder auf beiden Seiten der Textilie aufgebracht und anschließend derart vernetzt wird, dass eine Textilie, die auf mindestens einer Seite mit einer Elastomerschicht mit einem Flächengewicht von vorzugsweise unter 40 $g/m^2$ und insbesondere zwischen 5 und 40 $g/m^2$ beschichtet ist, erhalten wird.

**27.** Verfahren nach Anspruch 26, **dadurch gekennzeichnet, dass** die Beschichtung mit einem Rakel oder durch Klotzen durchgeführt wird.

**28.** Erzeugnis, das durch das Verfahren nach Anspruch 26 oder 27 hergestellt werden kann, wobei in dem Verfahren eine Emulsion verwendet wird, die in Gegenwart eines Polyvinylalkohols oder eines wasserdispergierbaren sulfonierten Polyesters hergestellt worden ist.